# DEMANDE DE BREVET EUROPEEN

(11) **EP 2 403 214 A1**
(43) Date de publication de la demande: **04.01.2012**
(21) Numéro de dépôt: 11172064.5
(22) Date de dépôt: 30.06.2011
(51) Int. Cl.: H04L 29/06

(54) **Procédé de mise en oeuvre de services dans un réseau de telecommunications**

(30) Priorité: 01.07.2010 FR 1055298
(71) Demandeur: FRANCE TELECOM, 75015 Paris (FR)
(72) Inventeur: Baroux, Loïc, 92100 Boulogne, Billancourt (FR)
(74) Mandataire: Delumeau, François Guy

(57) **Abrégé**

L'invention concerne un procédé mis en oeuvre par un serveur logique (210) hors d'un réseau de télécommunications (209) pour commander un premier serveur d'applications (AS1) localisé dans le réseau, le procédé comprenant la détermination, en fonction de paramètres d'une session, d'au moins un service (S1-S7) à mettre en oeuvre dans le réseau en relation avec la session, le procédé comprenant en outre l'envoi d'une commande (M108) dite de sous-traitance au premier serveur comprenant un identifiant dudit au moins un service et au moins un champ pour demander au premier serveur que ledit au moins un service soit mis en oeuvre par un autre serveur d'applications du réseau.

L'invention concerne également un serveur d'applications apte à recevoir une telle commande de sous-traitance afin de déclencher un service auprès d'un autre serveur du réseau.

## Description

### Arrière-plan de l'invention

L'invention se rapporte au domaine général de la réalisation de services dans un réseau de télécommunications, notamment utilisant une architecture de type IMS (« IP Multimedia Subsystem » en anglais) et concerne plus particulièrement la mise en oeuvre de services de télécommunication hébergés dans des serveurs d'applications, tels que ceux de type SIP.

De façon connue, un certain nombre de services de téléphonie élémentaires sont disponibles pour les utilisateurs de réseaux IMS. Ces services élémentaires permettent, par exemple, à un utilisateur de dissimuler son identité lorsqu'il tente d'établir une communication avec une autre personne, d'être redirigé vers une messagerie vocale ou encore d'initier une conférence téléphonique.

Cependant, de nouveaux services de téléphonie IMS dits enrichis sont régulièrement développés et proposés par les opérateurs afin d'améliorer leurs services auprès de leurs clients. Ces services de téléphonie IMS sont liés aux appels émis ou reçus par un utilisateur abonné, ces services étant exécutés par des serveurs d'applications de type SIP. Un serveur d'applications SIP hébergeant des fonctions de téléphonie classiques (renvoi d'appels, filtrage...) est généralement appelé « AS de téléphonie ».

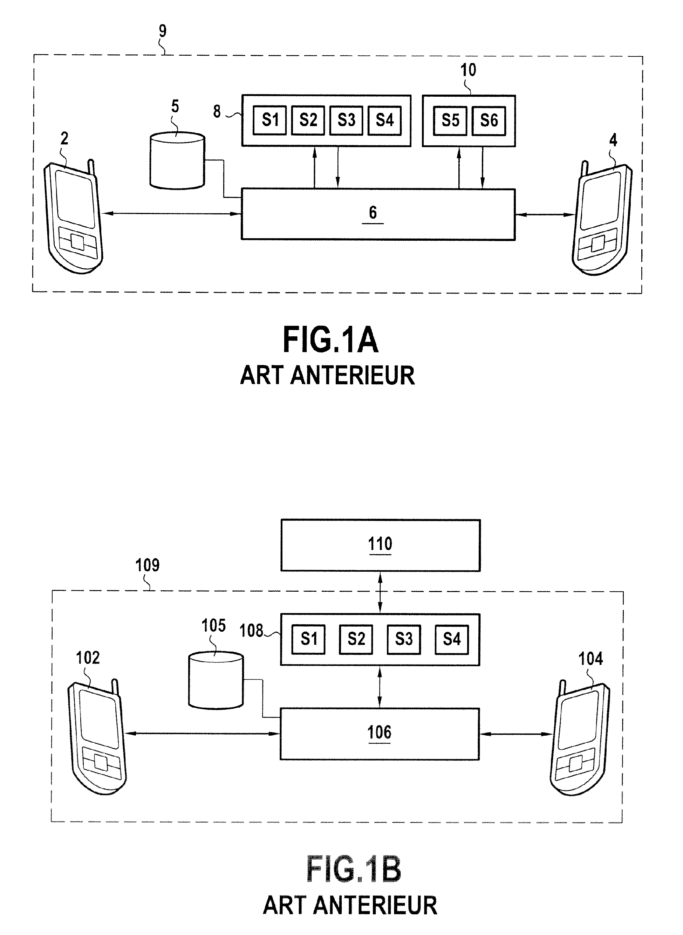

La **figure 1A** représente de manière schématique un exemple d'une architecture IMS dans laquelle sont hébergés des services de téléphonie. Dans cet exemple, un utilisateur appelant du terminal 2 souhaite établir une session de communication voix sur IP avec un utilisateur appelé du terminal 4 via le coeur de réseau IMS 6 situé dans le réseau IMS 9. Pour ce faire, le terminal 2 envoie un message SIP (de type « INVITE ») au coeur de réseau IMS 6, ce message comprenant un certain nombre de paramètres de session (identifiant de l'appelant, etc.). Une fois ce message SIP reçu, le coeur de réseau IMS 6 consulte au moins une base de données 5 (généralement appelée « HSS » pour « Home Subscriber Server ») située dans le réseau IMS 9, cette base de données comprenant des informations de profil propres à l'utilisateur appelant du terminal 2 et à l'utilisateur appelé du terminal 4. Ces informations de profil définissent en particulier les services auxquels les utilisateurs des terminaux 2 et 4 ont souscrit et auxquels ils ont par conséquent accès. Plus précisément, un profil d'utilisateur est généralement associé à des paramètres appelés « initial Filter Criteria » (iFC) qui permettent d'indiquer au coeur de réseau IMS 6 quels serveurs d'applications doivent être déclenchés, ainsi que les conditions et l'ordre de déclenchement.

Le coeur de réseau IMS 6 peut comprendre en particulier un serveur de type S-CSCF (pour « Call Session Control Function ») bien connu de l'homme du métier.

Dans l'exemple décrit ici, on suppose qu'à partir des informations de profil d'utilisateur extraites de la base de données 5, le coeur de réseau IMS 6 décide d'insérer le serveur d'applications SIP 8 dans la chaîne de signalisation de l'appel au cours d'établissement. Pour ce faire, il envoie un message SIP INVITE au serveur d'applications 8. Selon les paramètres de session inclus dans le message SIP reçu et la configuration du serveur d'applications 8, ce dernier met en oeuvre au moins un des services de téléphonie S1 à S4 qu'il héberge. Ces services peuvent être mis en oeuvre en relation avec l'utilisateur appelant et/ou avec l'utilisateur appelé.

De manière connue, un deuxième serveur d'applications SIP 10 hébergeant des services de téléphonie S5 et S6 peut également être inclus dans la chaîne de signalisation par le coeur de réseau IMS 6, et ce avant ou après le serveur d'applications SIP 8. Ce deuxième serveur d'applications SIP 10 (parfois appelé serveur d'applications « externe ») permet de réaliser des services enrichis sur la session de communication en cours d'établissement et en général des services que le serveur 8 n'est pas en mesure de mettre lui-même en oeuvre.

Une fois le deuxième serveur d'applications SIP 10 inclus dans la chaîne de signalisation, le coeur de réseau IMS 6 envoie un message SIP INVITE au terminal 4 de l'utilisateur appelé afin d'établir la session de communication entre l'appelant et l'appelé. Durant la session de communication SIP, des messages SIP sont échangés entre les terminaux 2 et 4 via le coeur de réseau IMS 6 et les serveurs d'applications invoqués qui souhaitent rester dans la session d'appel. Les messages SIP échangés peuvent comprendre, par exemple, les messages normalisés suivants : SIP 180 Ringing, SIP 200 OK, message ACK, SIP RE-INVITE, SIP INFO, SIP BYE etc. Ces messages sont bien connus de l'homme du métier et ne seront donc pas décrits plus en détail dans ce document.

L'utilisation de serveurs d'applications SIP additionnels ou externes tel que le serveur 10 permet avantageusement de mettre en oeuvre des services variés dans un environnement IMS. Cependant, l'utilisation d'une pluralité de serveurs d'applications SIP comme représenté en figure 1A présente des inconvénients d'utilisation majeurs.

En effet, les serveurs d'applications SIP sont associés de manière statique aux profils d'utilisateur enregistrés dans la base de données 5, ces associations étant fonction des services auxquels chaque utilisateur abonné a souscrit. Par conséquent, il n'est pas possible d'invoquer de manière dynamique un serveur d'applications qui n'est pas associé au profil utilisateur dans la base de données 5 et qui n'a donc pas été invoqué par le coeur de réseau IMS 6 lors de l'établissement la communication. Un serveur d'applications qui n'est pas associé au profil d'utilisateur de l'appelant ou de l'appelé ne peut être inséré dynamiquement dans la chaîne de signalisation de l'appel. De plus, il n'est pas possible d'activer ou de désactiver à volonté avant ou en cours de communication un serveur d'applications SIP inclus dans une chaîne de signalisation d'appel. Ces contraintes sur l'ajout et le retrait des serveurs d'applications existent en particulier pour les serveurs d'applications SIP fonctionnant en mode « Proxy Record-route » ou « B2B-UA » (pour « Back To Back User Agent »).

Dans le cas de la figure 1A, le serveur d'applications 10 met en oeuvre un service de téléphonie S5, ce service correspondant par exemple à une fonction d'arrêt dite « stop secret ». Cette fonctionnalité permet avantageusement de filtrer les appels destinés à l'utilisateur appelé de manière à ce que les appels atteignent uniquement le terminal 4 lorsque le numéro de téléphone du terminal 2 est présenté à l'appelé. Or, une fois la réalisation de ce service spécifique achevé, le serveur d'applications 9 hébergeant ce service « stop secret » reste obligatoirement dans la chaîne de signalisation de l'appel en cours, allongeant ainsi de manière inutile la chaîne de signalisation de l'appel.

L'utilisation d'une pluralité de serveurs d'applications SIP dans une chaîne de signalisation peut poser un certain nombre de problèmes.

Par exemple, un serveur d'applications additionnel tel que le serveur 10 peut interférer avec le serveur d'applications 8 mettant en oeuvre les services de téléphonie élémentaires. Ces conflits entre serveurs d'applications peuvent ainsi engendrer des incompatibilités ou interférences entre services, ce qui peut s'avérer néfaste pour les clients du réseau de télécommunications IMS 6.

De plus, les serveurs d'applications SIP utilisent généralement des interfaces de programmation (notés parfois API pour « Application Programming Interface ») qui ne sont pas compatibles entre elles. Ce manque d'uniformisation des interfaces de programmation rend particulièrement compliquée la personnalisation et la gestion des services de téléphonie dans un environnement IMS. Ces APIs peuvent être utilisées pour le développement de services utilisant les fonctions exposées par ces serveurs d'applications (raccrocher l'appel, renvoyer l'appel...). Ces services peuvent être externes au réseau IMS, comme par exemple un « widget PC » utilisé pour contrôler l'appel d'un téléphone fixe.

Par ailleurs, si une application doit utiliser les APIs de deux serveurs d'applications différents impliqués dans un même appel, la mise en oeuvre de cette application peut être particulièrement complexe, notamment si ces serveurs d'applications utilisent des identifiants de session différents.

De manière plus générale, l'inclusion de manière statique de plusieurs serveurs d'applications SIP dans une chaîne de signalisation d'un appel affecte de manière indésirable les ressources du réseau IMS. Les échanges répétés de message SIP avec les serveurs d'applications 8 et 10 présentent en effet un coût en termes de ressource pour le coeur de réseau IMS 6 (pour le serveur S-CSCF notamment).

Afin de palier notamment les inconvénients cités ci-dessus, plusieurs solutions ont déjà été envisagées par les opérateurs de téléphonie.

La **figure 1B** représente de manière schématique un environnement IMS similaire à celui représenté en figure 1A, à savoir un terminal 102 d'un utilisateur appelant susceptible d'établir une session de communication avec un terminal 104 d'un utilisateur appelé, et ce via un coeur de réseau IMS 106 du réseau IMS 109. Le serveur d'applications 108 est capable de mettre en oeuvre des S1 à S4 dans le réseau IMS 109. Par ailleurs, le coeur de réseau IMS 106 est capable de consulter la base de données HSS 105 comprenant des informations de profil comme décrit ci-avant. En outre, un serveur 110 est installé à l'extérieur du réseau IMS 109 afin de personnaliser le déclenchement de certains services dans le réseau IMS 109.

Le serveur 110 est ainsi capable de commander à distance le déclenchement de certains services élémentaires hébergés dans le serveur d'applications 108. La connaissance de l'API utilisée par le serveur d'applications 108 permet à des utilisateurs partenaires de développer des services personnalisés à partir du serveur 110. Ainsi, certaines APIs standardisées existent déjà telles que les APIs ParlayX ou CSTA, par exemple.

De nombreux vendeurs de serveurs d'applications de téléphonie proposent également des APIs plus ou moins avancées. Cependant, les services qui peuvent être développés et mis en oeuvre à partir de ces serveurs logiques sont limités par les fonctionnalités généralement réduites des serveurs d'applications de téléphonie.

D'autres solutions ont également été envisagées notamment par le groupe de travail 3GPP. Ainsi, la norme 3GPP TS 23.228 traite par exemple de l'allocation dynamique de plusieurs serveurs d'applications SIP lors de l'établissement d'un appel dans un réseau IMS. Cette norme permet ainsi de déclencher des services mis en oeuvre par des serveurs d'applications différents, dans un ordre donné et en fonction de critères dynamiques liés à la signalisation SIP de l'appel. Cependant, la sélection et la fourniture (ou le « provisionning ») des serveurs d'applications ainsi que les conditions de déclenchement sont statiques (définies par les critères iFC dans la base HSS).

Il existe donc un besoin dans l'état de la technique actuelle pour un mécanisme permettant de personnaliser et gérer de manière flexible et efficace le déclenchement de différents services dans un réseau de télécommunications, tels que ceux de type IMS par exemple.

### Objet et résumé de l'invention

A cet effet, l'invention propose un premier procédé mis en oeuvre par un serveur logique hors d'un réseau de télécommunications pour commander un premier serveur d'applications localisé dans le réseau, le procédé comprenant :
la détermination, en fonction d'au moins un paramètre d'une session dans ledit réseau, d'au moins un service à mettre en oeuvre dans le réseau en relation avec ladite session, le procédé étant caractérisé en ce qu'il comprend en outre :
   l'envoi d'une commande dite de sous-traitance au premier serveur comprenant un identifiant dudit au moins un service et au moins un champ pour demander au premier serveur que ledit au moins un service soit mis en oeuvre par un autre serveur d'applications dudit réseau.

Par « session », on entend dans la présente demande une session établie ou en cours d'établissement dans le réseau de télécommunications.

L'invention permet avantageusement de gérer le déclenchement de services (notamment de téléphonie) dans un réseau IMS et ce à distance grâce à l'utilisation d'un serveur logique externe. Cette gestion à distance offre un gain significatif en termes de flexibilité et de personnalisation lors du développement de nouveaux services à mettre en oeuvre dans un réseau IMS.

L'invention permet ainsi de limiter au maximum les ressources nécessaires pour mettre en oeuvre des services dans un réseau IMS et limite en outre les problèmes potentiels de conflits entre les différents serveurs d'applications impliqués dans une même session de communication.

Dans un mode de réalisation particulier du premier procédé de l'invention, le réseau est de type IMS, et le premier serveur d'applications ainsi que l'autre serveur d'applications sont de type SIP.

L'invention est avantageuse en ce que le serveur logique peut réaliser l'envoi de la commande de sous-traitance conformément à un protocole autre que le protocole de signalisation SIP.

Grâce au procédé de l'invention, il est possible, pour un opérateur par exemple, de gérer depuis l'extérieur du réseau IMS le déclenchement de services en relation avec une session établie, ou en cours d'établissement, entre au moins deux terminaux d'utilisateurs. Cet aspect de l'invention apporte une grande flexibilité vis-à-vis des réseaux IMS conventionnels où les services ne peuvent être invoqués que lors de l'initiation d'un appel. En effet, les identifiants des services désirés sont traditionnellement compris dans le message d'initiation d'appel INVITE envoyé depuis le terminal de l'appelant vers le coeur de réseau IMS. Autrement dit, c'est le terminal utilisateur de l'appelant qui doit indiquer, lors de l'initiation de l'appel, les services à déclencher dans le réseau.

Dans un mode particulier de réalisation de l'invention, l'envoi est réalisé lorsque le serveur logique a déterminé au préalable que le premier serveur n'est pas apte à réaliser le au moins un service.

Ce mode de réalisation permet ainsi de déclencher la sous-traitance d'un service et ce, uniquement lorsque le premier serveur d'applications n'est pas en mesure de mettre lui-même en oeuvre le service considéré. Il est ainsi possible d'optimiser la mise en oeuvre de services dans un réseau IMS.

Dans un mode de réalisation particulier, le premier procédé comprend en outre l'identification, avant l'étape d'envoi, de l'autre serveur, ledit au moins un champ contenant un identifiant de l'autre serveur.

Ce mode de réalisation permet au serveur logique de sélectionner au moins un serveur d'applications SIP différent du premier serveur, cet autre serveur étant apte à mettre en oeuvre le ou les services désirés.

Le premier procédé peut comprendre en outre l'envoi d'au moins une commande d'exécution à l'autre serveur de manière à piloter à distance la réalisation dudit au moins un service. De cette manière, le serveur logique peut fournir des données à un serveur d'applications afin de contrôler la mise en oeuvre d'au moins un service sous-traité.

Le premier procédé de l'invention peut également comporter une étape préliminaire de réception dudit au moins un paramètre en provenance du premier serveur. Ainsi, dans un mode de réalisation particulier, le serveur logique envoie une commande de sous-traitance au premier serveur en réponse à une notification d'appel préalablement reçue en provenance du premier serveur, cette notification d'appel comprenant au moins un paramètre de session.

Dans un mode de réalisation particulier, le premier procédé comprend en outre l'envoi d'une commande d'interruption au premier serveur commandant le retrait de l'autre serveur de la session.

De cette manière, il est possible d'interrompre ledit au moins un service dont la réalisation est sous-traitée par un autre serveur SIP et demander à ce que cet autre serveur se retire de la chaîne de signalisation de la session de communication considérée.

Dans un mode particulier de réalisation, les différentes étapes du premier procédé de l'invention sont déterminées par des instructions de programmes d'ordinateurs.

En conséquence, l'invention vise aussi un programme d'ordinateur sur un support d'informations, ce programme étant susceptible d'être mis en oeuvre dans un serveur logique ou plus généralement dans un ordinateur, ce programme comportant des instructions adaptées à la mise en oeuvre des étapes du premier procédé tel que décrit ci-dessus.

L'invention vise aussi un support d'enregistrement ou support d'informations lisible par un ordinateur, et comportant des instructions d'un programme d'ordinateur tel que mentionné ci-dessus.

Corrélativement, l'invention propose un second procédé mis en oeuvre par un premier serveur d'applications compris dans un réseau de télécommunications, le procédé comprenant :
la réception d'une commande dite de sous-traitance provenant d'un serveur logique externe au réseau, dans lequel la commande de sous-traitance comprend un identifiant d'au moins un service et au moins un champ pour demander au premier serveur que ledit au moins un service soit mis en oeuvre par un autre serveur d'applications du réseau,
l'identification, à partir de la commande de sous-traitance reçue, de l'autre serveur, et
l'envoi d'au moins un message à l'autre serveur commandant le déclenchement dudit au moins un service.

L'envoi de cette commande permet en particulier d'insérer l'autre serveur d'applications dans la session de communication considérée.

Dans un mode de réalisation particulier du second procédé de l'invention, le réseau est de type IMS, et le premier serveur d'applications ainsi que l'autre serveur d'applications sont de type SIP. Le premier serveur d'applicatians est de préférence configuré pour réaliser l'envoi du message directement à l'autre serveur, c'est-à-dire de façon ce que le message ne passe pas via le coeur du réseau IMS (tel que le coeur de réseau 6 de la figure 1A par exemple). L'envoi du message de déclenchement directement depuis le premier vers le second serveur d'applications permet avantageusement de réduire le trafic au niveau du coeur de réseau IMS et réduit par conséquent la consommation en termes de ressources induite par les déclenchements de services dans le réseau IMS.

Comme décrit ci-dessus en référence au premier procédé, le second procédé de l'invention permet avantageusement de déclencher de manière flexible et personnalisée la réalisation d'au moins un service par un serveur d'applications SIP différent du premier serveur.

Dans un mode de réalisation particulier, l'autre serveur SIP est identifié selon l'une des manières suivantes :
- à partir d'un identifiant de l'autre serveur extrait de la commande de sous-traitance reçue, ou
- à partir d'un identifiant de l'autre serveur mémorisé en association avec ledit au moins un service dans le premier serveur.

L'invention permet ainsi au serveur logique et/ou au premier serveur d'identifier un autre serveur d'applications SIP du réseau IMS apte à mettre en oeuvre un service désiré, et ce en fonction par exemple de règles de sélection prédéfinies.

Dans un mode de réalisation particulier, la commande de sous-traitance est reçue en réponse à l'envoi préalable d'au moins un paramètre d'une session établie ou en cours d'établissement dans le réseau, ledit au moins un service devant être mis en oeuvre dans le réseau en relation avec la session.

Des paramètres de session peuvent, par exemple, être transmis au préalable par le premier serveur lors de l'envoi d'une notification d'appel au serveur logique.

Le second procédé peut comprendre en outre, en réponse à une commande d'interruption reçue en provenance du serveur logique, l'envoi d'un second message à l'autre serveur commandant à cet autre serveur de se retirer de la session.

De cette manière, il est possible d'interrompre un service dont la réalisation est sous-traitée par un autre serveur SIP et demander à ce que cet autre serveur se retire de la chaîne de signalisation de la session de communication considérée.

Dans un mode particulier de réalisation, les différentes étapes du second procédé de l'invention sont déterminées par des instructions de programmes d'ordinateurs.

En conséquence, l'invention vise aussi un programme d'ordinateur sur un support d'informations, ce programme étant susceptible d'être mis en oeuvre dans un serveur d'applications SIP ou plus généralement dans un ordinateur, ce programme comportant des instructions adaptées à la mise en oeuvre des étapes d'un second procédé de l'invention tel que décrit ci-dessus.

L'invention vise aussi un support d'enregistrement ou support d'informations lisible par un ordinateur, et comportant des instructions d'un programme d'ordinateur tel que mentionné ci-dessus.

Les programme mentionnés ci-avant peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De plus, les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

L'invention concerne également un serveur logique et un serveur d'applications. Les avantages et commentaires énumérés ci-avant en référence aux différents modes de réalisation du premier procédé et second procédé selon l'invention s'appliquent de manière analogue aux différents modes de réalisation du serveur logique et du serveur d'applications de l'invention.

Plus précisément, l'invention propose un serveur logique externe à un réseau de télécommunications et apte à commander un premier serveur d'applications localisé dans le réseau, le serveur logique comprenant :
des moyens de détermination, en fonction d'au moins un paramètre d'une session dans le réseau, d'au moins un service à mettre en oeuvre dans le réseau IMS en relation avec la session, le serveur logique étant caractérisé en ce qu'il comprend en outre :
   des moyens d'envoi d'une commande dite de sous-traitance au premier serveur comprenant un identifiant dudit au moins un service et au moins un champ pour demander au premier serveur que ledit au moins un service soit mis en oeuvre par un autre serveur d'applications du réseau.

Comme indiqué ci-avant, on entend dans la présente demande par « session » une session établie ou en cours d'établissement dans le réseau de télécommunications.

Dans un mode de réalisation particulier du serveur logique de l'invention, le réseau est de type IMS, et le premier serveur d'applications ainsi que l'autre serveur d'applications sont de type SIP.

Le serveur logique peut comprendre outre au moins une des interfaces suivantes : une interface http, une interface « web service », une interface RMI et une interface CORBA, vers au moins un serveur IMS. Plus généralement, le serveur logique peut comprendre une quelconque interface applicative avec un serveur d'applications.

L'invention propose également un serveur d'applications compris dans un réseau de télécommunications, le serveur comprenant :
des moyens de réception d'une commande dite de sous-traitance provenant d'un serveur logique externe au réseau, dans lequel la commande de sous-traitance comprend un identifiant d'au moins un service et au moins un champ pour demander au premier serveur que ledit au moins un service soit mis en oeuvre par un autre serveur d'applications du réseau,
des moyens d'identification, à partir de la commande de sous-traitance reçue, de l'autre serveur, et
des moyens d'envoi d'au moins un message à l'autre serveur SIP commandant le déclenchement dudit au moins un service.

Dans un mode de réalisation particulier du serveur d'applications de l'invention, le réseau est de type IMS, et le premier serveur d'applications ainsi que l'autre serveur d'applications sont de type SIP.

Les moyens d'envoi sont de préférence configurés pour envoyer le message de déclenchement directement à l'autre serveur, c'est-à-dire sans passer par le coeur de réseau IMS. Il est ainsi possible de réduire le trafic affectant le coeur du réseau IMS.

L'invention propose en outre un système comprenant :
- un serveur logique selon l'un quelconque des modes de réalisation mentionnés ci-dessus ; et
- un serveur d'applications selon l'invention.

Ce système peut comprendre en outre au moins un serveur d'applications dans le réseau, ce serveur étant différent du premier serveur. Dans un mode de réalisation particulier du système de l'invention, les serveurs d'applications considérés sont de type SIP.

### Brève description des dessins

D'autres caractéristiques et avantages de la présente invention ressortiront de la description faite ci-dessous en référence aux dessins annexés qui illustrent un exemple de réalisation dépourvu de tout caractère limitatif. Sur les figures :
- la figure 1A représente, de manière schématique, un environnement IMS mettant en oeuvre de façon connue des serveurs d'applications de type SIP ;
- la figure 1B représente, de façon schématique, un environnement IMS dans lequel se trouve un serveur d'applications SIP commandé de façon connue par une logique de service ;
- la figure 2 représente, de façon schématique, un environnement IMS mettant en oeuvre un serveur d'applications et une logique de service conforme à un mode de réalisation particulier de l'invention ;
- la figure 3 représente, de façon schématique, l'architecture matérielle d'un serveur d'applications SIP conforme à un mode particulier de réalisation de l'invention ;
- la figure 4 représente, de façon schématique, l'architecture matérielle d'un serveur logique conforme à un mode de réalisation particulier de l'invention ;
- la figure 5A représente un premier mode de réalisation de la commande de sous-traitance selon l'invention ;
- la figure 5B représente un deuxième mode de réalisation de la commande de sous-traitance selon l'invention ;
- la figure 6 représente, sous forme d'un organigramme, les principales étapes d'un procédé A1 (respectivement B1) mis en oeuvre par un serveur d'applications SIP (respectivement, par un serveur logique) conformément à un mode de réalisation particulier de l'invention ;
- la figure 7 représente, sous forme d'un organigramme, les principales étapes d'un procédé A2 (respectivement B2) mis en oeuvre par un serveur d'applications SIP (respectivement, par un serveur logique) conformément à un mode de réalisation particulier de l'invention ; et
- la figure 8 représente, sous forme d'un organigramme, les principales étapes d'un procédé A3 (respectivement B3) mis en oeuvre par un serveur d'applications SIP (respectivement, par un serveur logique) conformément à un mode de réalisation particulier de l'invention.

### Description détaillée de modes de réalisation particuliers de l'invention

L'invention concerne le déclenchement de services hébergés dans des serveurs d'applications localisés dans un réseau de télécommunications, tels qu'un réseau IMS par exemple. A ce titre, on notera que les exemples de mise en oeuvre de l'invention décrits ci-après s'appliquent plus particulièrement au déclenchement de services hébergés dans des serveurs d'applications SIP situés dans un réseau IMS. On comprendra cependant que l'invention peut s'appliquer à d'autres types de serveurs et de réseaux de télécommunications.

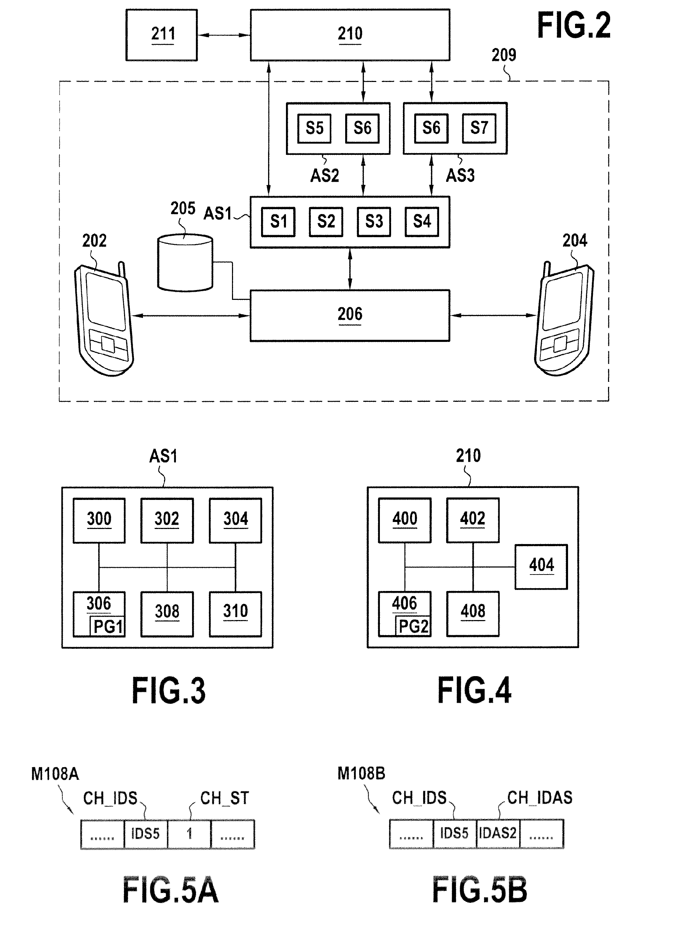

La **figure 2** représente un environnement IMS 209 similaire au réseau IMS 9 représenté en figure 1A. Plus précisément, un terminal 202 d'un utilisateur appelant est capable d'établir une communication avec le terminal 204 d'un utilisateur appelé, et ce via un coeur de réseau IMS 206 localisé dans le réseau IMS 209. On notera que les terminaux 202 et 204 peuvent correspondre, par exemple, à un téléphone fixe ou mobile, à un ordinateur personnel, un PDA...Les terminaux 202 et 204 fonctionnent selon le protocole de signalisation SIP et sont compris dans le réseau IMS 209.

Le coeur de réseau IMS 206 considéré ici est identique aux coeurs de réseau IMS 6 et 106 décrits en référence aux figures 1A et 1B, respectivement. En particulier, le coeur de réseau IMS 206 est apte à consulter une base de données 205 (de type « HSS », par exemple) localisée dans le réseau IMS 209, cette base étant identique aux bases de données 5 et 105. La base de données 205 comprend en particulier des informations permettant de déclencher des serveurs d'applications de façon à ce que ces derniers exécutent les services associés aux utilisateurs impliqués dans une session de communication.

Le réseau IMS 209 comprend également un serveur d'applications SIP AS1 capable de mettre en oeuvre des services notés S1 à S4. Le serveur AS1 peut correspondre, par exemple, à un serveur de type S-CSCF.

Dans l'exemple envisagé ici, l'environnement IMS 209 comprend deux serveurs d'applications SIP supplémentaires notés AS2 et AS3, ceux-ci étant aptes à communiquer directement avec le premier serveur d'applications AS1, c'est-à-dire sans que les échanges de messages transitent par le coeur de réseau IMS 206.

Dans cet exemple, le serveur d'applications AS2 est apte à mettre en oeuvre des services S5 et S6 tandis que le serveur d'applications AS3 est apte à mettre en oeuvre des services S6 et S7. A noter que, dans la suite de ce document, on considère le cas où les serveurs d'applications AS1, AS2 et AS3 fonctionnent selon le mode B2B-UA mentionné ci-avant. On comprendra cependant que l'invention peut s'appliquer à des serveurs d'applications fonctionnant suivant des modes différents.

On considère en outre ici que les services S5, S6 et S7 sont des services IMS enrichis vis-à-vis des services S1 à S4 dits « élémentaires » générés par le serveur d'applications AS1. Ces services enrichis S5 à S7 peuvent correspondre par exemple à des fonctionnalités de téléphonie telles que la fonctionnalité « call hunting » ou encore à une fonction de déformation de voix (des exemples de services enrichis seront décrits plus en détail ultérieurement). On notera cependant que l'invention s'applique pour la mise en oeuvre de services quelconques dans un réseau IMS.

Par ailleurs, un serveur logique 210, conforme à un mode de réalisation particulier de l'invention, est situé à l'extérieur du réseau IMS 209.

Dans ce document, on entend par « serveur logique », un serveur configuré par un opérateur pour définir une logique (ou un scénario) au niveau service. Cette logique définit comment doit se dérouler une session de communication dans le réseau IMS et ce en fonction notamment de paramètres de session.

Le serveur logique 210 est en particulier capable de communiquer avec les serveurs d`applications SIP AS1, AS2 et AS3 situés dans le réseau IMS 209.

La **figure 3** représente l'architecture matérielle du serveur d'apptications AS1 conformément à un mode de réalisation particulier de l'invention. Plus précisément, le serveur d'apptications AS1 présente ici l'architecture matérielle d'un ordinateur conventionnel. Il comprend notamment un processeur 300, une mémoire vive de type RAM 302, une mémoire non volatile 304 (de type EPROM par exemple) et une mémoire ROM 306,

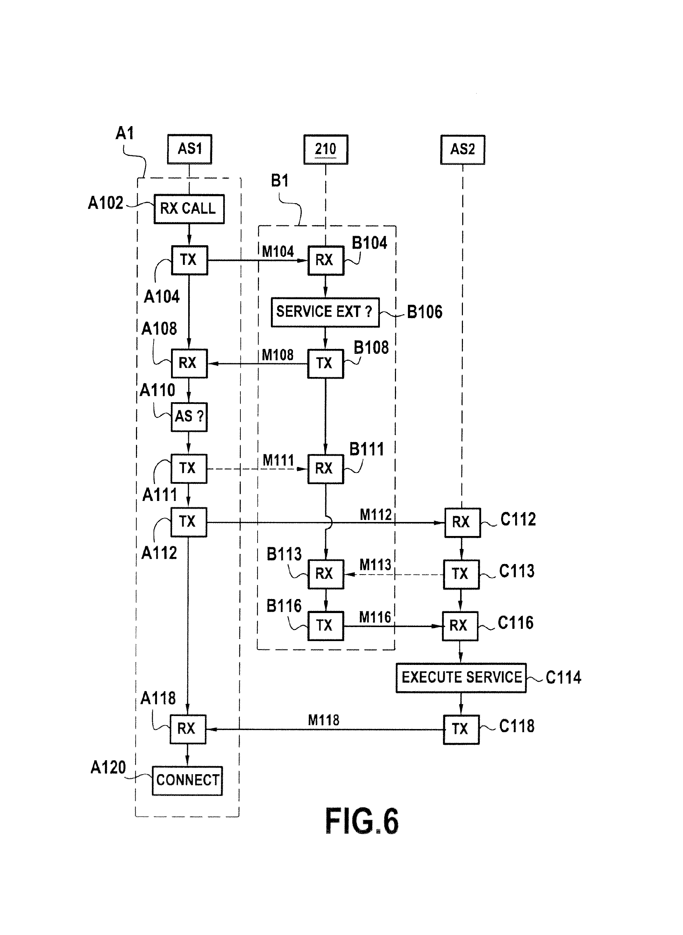

La mémoire ROM 306 constitue un support d'enregistrement conforme à l'invention lisible par le serveur d'applications AS1 et sur lequel est enregistré un programme d'ordinateur PG1 conforme à l'invention. De plus, le programme d'ordinateur PG1 comporte des instructions pour l'exécution des étapes des procédés A1, A2 et A3 conformes à des modes de réalisation particuliers de l'invention. Les principales étapes des procédés de l'invention A1, A2 et A3 sont représentées respectivement sur les figures 6, 7 et 8 qui seront décrites en détails ultérieurement.

Le serveur d'applications AS1 comporte en outre une interface de signalisation réseau 308 permettant de traiter la signalisation d'appel SIP dans le réseau IMS 209. L'interface de signalisation réseau 308 permet notamment au serveur AS1 d'échanger des messages SIP avec d'autres entités SIP du réseau IMS tels que les serveurs d'applications AS2 et AS3, par exemple.

Le serveur d'applications AS1 comprend également une interface de service 310 permettant d'échanger des données avec des entités externes au réseau IMS 209 tels que le serveur logique 210.

On notera que, dans l'exemple décrit ici, les serveurs d'applications AS2 et AS3 présentent des architectures matérielles similaires à celles décrites en référence au serveur d'applications AS1. Ces serveurs comportent en particulier un processeur, une mémoire vive RAM, une mémoire non volatile, une mémoire ROM, une interface de signalisation réseau et une interface de service.

La **figure 4** représente l'architecture matérielle du serveur logique 210 conformément à un mode de réalisation particulier de l'invention. Le serveur logique 210 présente ici l'architecture matérielle d'un ordinateur conventionnel. Il comprend notamment un processeur 400, une mémoire vive RAM 402, une mémoire non volatile 404 (de type EPROM, par exemple) et une mémoire morte ROM 406.

La mémoire morte 406 constitue un support d'enregistrement conforme à l'invention lisible par le serveur logique 210 et sur lequel est enregistré un programme d'ordinateur PG2 conforme à l'invention. En outre, le programme PG2 comporte des instructions pour l'exécution des étapes des procédés de l'invention S1, B2 et B3 conformes à des modes de réalisation particuliers de l'invention. Les principales étapes des procédés B1, B2 et B3 sont représentées sur les figures 6, 7 et 8 respectivement qui seront décrites en détails ultérieurement.

Le serveur logique 210 comprend en outre une interface de service 408 permettant d'échanger des données avec des entités localisées dans le réseau IMS 209 tels que les serveurs d'applications AS1, AS2 et AS3. L'interface 408 est configurée pour échanger des informations avec les serveurs AS1, AS2 et AS3 conformément à un protocole autre que le protocole de signalisation SIP.

Le serveur logique 210 correspond, par exemple, à un serveur de type J2EE, Microsoft ASP ou Apache avec PHP, De manière alternative, il peut également s'agir d'un environnement d'exécution en « cloud » de type « Google Apps Engine » ou encore d'un client logiciel (application sur un PC, par exemple). De plus, l'interface de service 408 correspond, par exemple, à une interface http, une interface « web service » ou encore à une interface RMI ou CORBA. A noter également que, dans une variante de l'invention, le serveur logique 210 peut être muni d'une interface de signalisation réseau.

Une mise en oeuvre particulière de l'invention est à présent décrite en référence aux **figures 2 à 6****.** On considère en particulier le serveur d'applications SIP AS1 mettant en oeuvre le procédé A1 conformément à un mode de réalisation particulier de l'invention ainsi que le serveur logique 210 mettant en oeuvre le procédé B1 conformément à un mode de réalisation particulier de l'invention.

On considère ici le cas où un utilisateur appelant tente, au moyen du terminal 202, d'établir une communication avec un utilisateur appelé du terminal 204. Pour ce faire, le terminal 202 envoie une requête (de type SIP INVITE par exemple) au coeur de réseau IMS 206 afin d'établir un appel. Cette requête comprend notamment des paramètres de session correspondant, par exemple, à l'identifiant de l'appelant et à l'identifiant de l'appelé.

Comme décrit précédemment en référence aux figures 1A et 1B, le coeur de réseau IMS 206 est capable de consulter une base de données 205 (de type HSS par exemple) comprenant des informations de profil d'utilisateur. La base de données 205 indique alors au coeur de réseau IMS 206 les serveurs d'applications à déclencher dans le réseau IMS 209, ainsi que l'ordre et éventuellement les conditions de déclenchement.

Une fois cette étape de consultation réalisée, le coeur de réseau IMS 206 appelle successivement les serveurs d'applications à impliquer en cours d'établissement d'appel. Dans l'exemple envisagé ici, le coeur de réseau IMS 206 procède au routage de la requête SIP d'établissement d'appel vers le serveur d'application AS1. A noter que le coeur de réseau ajoute des paramètres utiles au serveur AS1 dans la requête d'établissement d'appel avant de procéder à l'envoi de la requête. L'envoi de cette requête au serveur AS1 permet de déclencher l'exécution des services souscrits par l'utilisateur appelant. A noter que la base de données 205 n'a pas nécessairement connaissance des services à déclencher en relation avec l'utilisateur appelant ou appelé.

Une fois le message SIP provenant du coeur de réseau IMS 206 reçu (étape A102), le serveur d'applications AS1 envoie (étape A104) une requête d'établissement d'appel M104 au serveur logique 210 au moyen de son interface de service 310. La requête M104 comprend également les paramètres de session reçus depuis le coeur de réseau IMS 206.

Le serveur logique 210 reçoit la requête M104 au cours d'une étape de réception B104. Une fois la requête M104 reçue, le serveur logique 210 initie une étape dite de détermination (B106). Au cours de cette étape de détermination B106, le serveur logique 210 déterimine au moins un service à mettre en oeuvre dans le réseau IMS 209 en relation avec la session de communication (notée par la suite « SE1 ») en cours d'établissement entre les terminaux 202 et 204. Cette détermination s'effectue à partir notamment des paramètres de session extraits de la requête d'établissement d'appel M104 reçue et ce conformément à des règles de traitement prédéfinies. Ces règles de traitement sont par exemple préconfigurées par un opérateur et sont mémorisées dans le programme PG2.

On notera que le serveur logique 210 peut en outre prendre en compte des paramètres autres que les paramètres de session de la requête M104 pour déterminer les services à mettre en oeuvre dans le réseau IMS 209. Ces paramètres peuvent correspondre, par exemple, à des données associées à l'utilisateur appelant du terminal 202 et auquel le service logique 210 a accès. Le serveur logique 210 peut, par exemple, prendre en compte des informations d'agenda compris dans un agenda électronique pour déterminer au cours de l'étape de détermination B101 les services à mettre en oeuvre dans le réseau IMS 209.

Dans l'exemple envisagé ici, on supposera qu'à l'issue de l'étape de détermination B106, le serveur logique 210 détermine que le service S5 doit être déclenché en relation avec la session de communication SE1.

Au cours d'une étape d'envoi B108, le serveur logique 210 transmet une commande M108 dite de sous-traitance au serveur d'applications AS1 qui la reçoit au cours d'une étape A108.

La commande de sous-traitance M108 selon l'invention comprend un champ d'identification de service noté CH_IDS contenant l'identifiant d'au moins un service à déclencher dans le réseau IMS209 en relation avec la session de communication SE1. Dans cet exemple, le champ CH_IDS contient l'identifiant de service IDS5 correspondant au service S5 à réaliser.

On notera que la commande de sous-traitance M108 selon l'invention peut prendre plusieurs formes.

La **figure 5A** représente un premier mode de réalisation noté M108A de la commande de sous-traitance M108 selon l'invention.

La commande de déclenchement M108A comprend notamment un champ d'identification de service CH_IDS contenant au moins un identifiant de service (IDS5 dans le cas présent). La commande M108 comprend en outre un champ dit de sous-traitance noté CH_ST contenant un bit pouvant être fixé à 0 ou à 1. Ce champ de sous-traitance CH_ST permet au serveur logique 210 d'indiquer au serveur d'applications cible (à savoir, le serveur AS1) si le service identifié dans le champ CH_IDS doit être sous-traité auprès d'un autre serveur d'applications du réseau IMS ou s'il doit être effectué par le serveur AS1 lui-même.

Dans de ce premier mode de réalisation, le serveur logique 210 fixe par exemple le bit du champ de sous-traitance CH_ST à 1 lorsque la réalisation du (ou des) service(s) désiré(s) (i.e. le ou les services identifiés dans le champ CH_IDS) doit être sous-traitée par un autre serveur d'applications SIP du réseau IMS 209 que le serveur AS1. On notera que, dans ce cas, le serveur logique 210 ne spécifie pas dans la commande de sous-traitance M108A le ou les serveurs d'applications devant prendre en charge la réalisation du ou des services requis.

Si, en revanche, le bit du champ de déclenchement CH_ST de la commande M108A est fixé à 0, cela signifie que les services identifiés dans le champ CH_IDS doivent être mis en oeuvre par le serveur d'applications AS1 lui-même.

La **figure 5B** représente un deuxième mode de réalisation noté M108B de la commande de sous-traitance M108 selon l'invention.

Dans ce mode de réalisation particulier, la commande de sous-traitance M108B comprend un champ d'identification de service CH_IDS identique à celui décrit en référence à la figure 5A. La commande M108B comprend en outre un champ d'identification de serveur d'applications CH_IDAS susceptible de contenir l'identifiant d'au moins un serveur d'applications. Un tel identifiant peut correspondre, par exemple, à l'adresse d'un serveur d'applications. Une telle adresse peut être, par exemple, une URI SIP suivie d'au moins un paramètre. Un exemple d'URI SIP se présente de la manière suivante :
sip :Adresse_SIP_AS2;parameter1;parameter2.

Ce champ CH_IDAS permet d'identifier au moins un serveur d'applications devant mettre en oeuvre le (ou les) service(s) identifié(s) dans le champ d'identification de service CH_IDS. Dans l'exemple décrit ici, le champ CH_IDAS contient l'identifiant IDAS2 du serveur AS2.

On supposera que, dans cet exemple, le serveur logique 210 a inséré l'identifiant IDAS2 dans la commande de sous-traitance M108B conformément à des règles de traitement prédéfinies.

Suite à l'étape de réception (A108) de la commande de sous-traitance M108, le serveur d'applications AS1 initie une étape d'identification A110. Au cours de cette étape A110, le serveur d'applications AS1 extrait du champ d'identification de service CH_IDS le ou les services à mettre en oeuvre dans le réseau IMS 209 en relation avec la session SE1. Dans l'exemple envisagé ici, le serveur d'applications AS1 détermine ainsi que le service S5 doit être mis en oeuvre. Le serveur d'applications AS1 détermine en outre à partir de la commande M108 s'il doit réaliser lui-même le service S5 ou si la réalisation de ce service doit être sous-traitée auprès d'un ou plusieurs autres serveurs d'applications SIP dans le réseau IMS 209.

Si, par exemple, le serveur d'applications AS1 reçoit la commande de sous-traitance M108A lors de l'étape A108, celui-ci détermine à partir du contenu du champ de sous-traitance CH_ST si le service S5 doit être ou non sous-traité par un autre serveur d'applications SIP du réseau IMS. Plus particulièrement, le serveur AS1 détermine, par exemple, que le service S5 doit être sous-traité par un autre serveur d'applications lorsque le bit du champ CH_ST est fixé à 1. Dans le cas contraire, le serveur AS1 en déduit qu'il doit réaliser lui-même le service S5. De plus, lorsque le champ de la commande M108A reçue est fixé à 1, le serveur d'applications AS1 déduit, à partir de l'identifiant de service contenu dans le champ CH_IDS (IDS5 dans le cas présent), le ou les serveurs d'applications SIP du réseau IMS 209 susceptibles de mettre en oeuvre le service demandé.

On comprendra naturellement que lorsque plus d'un service est identifié dans le champ CH_IDS, le serveur d'applications AS1 détermine, pour chaque service à réaliser, le ou les serveurs d'applications SIP du réseau IMS 209 susceptibles de mettre en oeuvre les services demandés.

Le serveur AS1 peut, par exemple, consulter sa mémoire non volatile 304 afin de déterminer l'identifiant d'au moins un serveur d'applications SIP mémorisé en association avec l'identifiant de service IDS5 du service S5 à réaliser. Ces informations sont, par exemple, configurées par un opérateur et permettent au serveur d'applications AS1 d'identifier pour chaque service à sous-traiter le ou les serveurs d'applications SIP appropriés dans le réseau IMS 209. Dans l'exemple considéré ici, on supposera que le serveur AS1 identifie le serveur d'applications SIP AS2 comme étant apte à mettre en oeuvre le service S5 dans le réseau IMS 209.

Alternativement, si le serveur d'applications AS1 reçoit la commande de sous-traitance M108B au cours de l'étape A108, celui-ci extrait alors du champ CH_IDAS l'identifiant d'au moins un serveur d'applications SIP devant mettre en oeuvre le ou les services identifiés dans le champ CH_IDS (étape A110). Dans l'exemple décrit ici, le serveur d'applications AS1 extrait l'identifiant IDAS2 et en déduit que le serveur d'applications AS2 doit mettre en oeuvre le service S5 en relation avec la session de communication SE1 dans le réseau IMS 209.

Une fois que le serveur d'applications AS1 a déterminé au cours de l'étape A110 le ou les serveurs d'applications devant mettre en oeuvre le ou les services demandés, le serveur AS1 envoie (étape A112) un message de signalisation SIP M112 à chacun de ces serveurs d'applications. Ces messages permettent de déclencher les serveurs ainsi déterminés au moyen de l'interface de signalisation réseau 308 du serveur AS1. En pratique, chacun de ces messages correspond typiquement à la requête d'établissement d'appel M104 (de type SIP INVITE, par exemple) qui est routée par le serveur AS1 vers les serveurs d'applications devant mettre en oeuvre au moins un service demandé dans le réseau IMS 209. Ces messages M112 peuvent contenir l'identifiant de chaque service à réaliser selon les serveurs d'applications concernés.

Dans l'exemple décrit ici, le serveur AS1 envoie (étape A112) un message de signalisation SIP M112 vers le serveur d'applications SIP AS2 afin que celui-ci mette en oeuvre le service S5 demandé. Le message SIP M112 est envoyé directement du serveur AS1 au serveur d'applications SIP AS2, c'est-à-dire, sans passer par le coeur de réseau IMS 206. Dans cet exemple, on supposera que le message SIP M112 contient notamment l'identifiant IDS5 du service S5 à réaliser.

Une fois le message SIP 112 reçu au cours d'une étape C112, le serveur AS2 en extrait l'identifiant IDS5. Le serveur d'applications AS2 procède alors à l'exécution du service S5 lors d'une étape d'exécution C114.

Le service S5 peut correspondre, par exemple, à une fonction dite de « call hunting ». Ce service permet, lorsque l'utilisateur appelant du terminal 202 tente de joindre l'appelé du terminal 204, d'envoyer des messages d'invitation SIP vers différents terminaux préconfigurés de l'utilisateur appelé. En d'autres termes, lors de l'étape d'exécution C114, le serveur AS2 envoie des messages SIP de type INVITE afin de faire sonner simultanément plusieurs terminaux de l'utilisateur appelé. Le service S5 peut également correspondre à une fonction dite « stop secret » permettant au serveur d'applications AS2 de bloquer la demande d'appel provenant du terminal 202 lorsque celui-ci ne fournit pas son identifiant (son numéro de téléphone, par exemple).

De multiples autres services enrichis peuvent être envisagés comme, par exemple, la connexion du terminal 202 vers une messagerie spécifique pendant que le serveur d'applications AS2 tente d'établir une connexion avec le terminal 204 de l'appelé.

On notera que si, en revanche, au cours de l'étape A110, le serveur d'applications AS1 détermine qu'il doit lui-même réaliser le service S5 demandé, celui-ci déclenche la réalisation du service S5 de manière conventionnelle.

D'autre part, selon l'issue de l'étape d'exécution C114, le serveur d'applications AS2 peut décider :
- de laisser se poursuivre l'établissement de l'appel ou de le rediriger vers une nouvelle adresse ;
- de bloquer l'appel en cours d'établissement ; ou
- de connecter l'appel à un serveur média (connexion d'un flux média sur un serveur media etc.)

On notera par exemple que, dans certains cas, le serveur AS2 détermine au cours de l'étape C114 qu'aucune session de communication ne doit être établie entre les terminaux 202 et 204. Ceci est le cas, par exemple, lorsque le service S5 correspond à la fonction « stop secret » et que le serveur AS2 détermine au cours de l'étape d'exécution C114 que le numéro de téléphone du terminal 202 est masqué.

Dans le cas présent, on suppose que le serveur d'applications AS2 détermine à l'issue de l'étape C114 que la session de communication SE1 doit être établie. Celui-ci envoie par conséquent au cours d'une étape C118 un message de signalisation SIP M118 au serveur d'applications AS1. Ce message est envoyé directement du serveur AS2 au serveur AS1 sans passer par le coeur de réseau IMS 206. Ce message peut correspondre typiquement à une requête de type SIP INVITE. Une fois le message SIP M118 reçu (étape A118), le serveur d'applications AS1 établit une session de communication entre les terminaux 202 et 204 via le coeur de réseau IMS 206.

A noter qu'une fois la session de communication SE1 établie, le serveur AS2 peut également mettre en oeuvre des services en relation avec l'appel en cours.

On envisage à présent un second cas pratique dans lequel le serveur logique 210 détermine à l'étape B106 que le service S6 doit être mis en oeuvre dans le réseau IMS 209. Dans ce cas, le serveur logique 210 peut, par exemple, envoyer une commande de sous-traitance M108B au serveur d'applications AS1 au cours de l'étape B108 de sorte que le champ CH_IDAS de cette commande comprenne les identifiants IDAS2 et IDAS3 des serveurs d'applications AS2 et AS3, respectivement. Après réception de cette commande de sous-traitance (étape A108), le serveur d'applications AS1 procède alors à l'étape d'identification A110. Au cours de cette étape, le serveur AS1 détermine, à partir du contenu du champ CH_IDAS, que les serveurs AS2 et AS3 doivent mettre en oeuvre le service S6 identifié dans le champ CH_IDS. Le serveur AS1 envoie alors, au cours de l'étape A112, un message SIP M112 vers les serveurs AS2 et AS3 afin que ces derniers mettent en oeuvre le service S6 demandé. Ces messages sont envoyés directement du serveur AS1 aux serveurs AS2 et AS3 sans passer par le coeur de réseau IMS 206.

Alternativement, le serveur logique 210 peut être configuré pour sélectionner au moins un serveur d'applications SIP préféré dans le réseau IMS 209 afin que seul(s) le ou les serveurs sélectionnés mettent en oeuvre le service S6 désiré. Si, par exemple, le serveur logique 210 souhaite que seul le serveur AS2 mette en oeuvre le service S6 désiré, il envoie une commande de sous-traitance M108B au serveur AS1 (étape B108) qui contient l'identifiant IDAS2 dans le champ CH_IDAS. En revanche, le champ CH_IDAS de cette commande ne contient pas l'identifiant IDAS3 du serveur AS3. De cette manière, le serveur logique 210 peut indiquer au serveur AS1 que le service S6 doit être mis en oeuvre par le serveur AS2 uniquement.

Une telle sélection de la part du serveur logique 210 peut être réalisée, par exemple, conformément à des règles de sélection préconfigurées (par un opérateur, par exemple) dans le serveur logique 210. Ces règles peuvent, par exemple, définir un ordre de préférence des serveurs d'applications SIP du réseau IMS 209 en fonction de paramètres tels que le service demandé, la charge de traitement actuelle des serveurs d'applications dans le réseau IMS 209, la disponibilité actuelle des serveurs d'applications SIP dans le réseau IMS 209 etc.

Si, en revanche, le serveur d'applications AS1 reçoit au cours de l'étape A108 une commande de sous-traitance M108A contenant l'identifiant IDS6 du service S6 dans le champ CH_IDS et le bit du champ CH_ST fixé à 1 (i.e. sous-traitance requise), le serveur AS1 détermine lors de l'étape A110 que les serveurs d'applications AS2 et AS3 sont aptes à mettre en oeuvre ce service.

Dans ce cas, plusieurs mises en oeuvre sont possibles. Le serveur AS1 peut envoyer au cours de l'étape A112 un message SIP M112 directement aux serveurs AS2 et AS3 afin de demander à ces deux serveurs de déclencher le service S6 demandé. L'envoi des commandes M112 peut se faire de manière simultanée ou séquentielle selon la configuration du serveur AS1.

De manière alternative, le serveur AS1 peut sélectionner lors de l'étape A110 au moins un serveur d'applications SIP du réseau IMS 209 parmi ceux identifiés comme aptes à réaliser le service S6 demandé. Dans ce cas, le serveur AS1 peut sélectionner le serveur AS2 ou AS3. On supposera ici que c'est le serveur AS2 qui est sélectionné par le serveur AS1 pour mettre en oeuvre le service S6 demandé. Cette sélection peut être réalisée, par exemple, en fonction de règles de sélection préétablies mémorisées dans le serveur AS1 (dans sa mémoire non-volatile 304, par exemple). De telles règles de sélection définissent, par exemple, un ordre de priorité entre plusieurs serveurs d'applications SIP du réseau IMS 209, ce en fonction de paramètres tels que le service à déclencher, la charge de traitement actuelle des serveurs d'applications SIP dans le réseau IMS 209, la disponibilité actuelle et/ou la facilité d'accès des serveurs d'applications SIP dans le réseau IMS 209 etc.

Une fois cette sélection effectuée, le serveur d'applications AS1 envoie au cours de l'étape A112 un message SIP M112 vers le serveur d'applications AS2 ainsi sélectionné afin que ce dernier mette en oeuvre le service S6. Ces message est envoyé directement par le serveur AS1 au serveur AS2 sans passer par le coeur de réseau IMS 206.

Le serveur AS1 doit en outre faire le nécessaire pour que le serveur AS2 sélectionné puisse par la suite dialoguer avec le serveur logique 210. Deux alternatives sont alors envisageables. Selon une première alternative, le serveur AS1 peut envoyer, en réponse à la commande M108, un message M111 au serveur logique 210 au cours d'une étape A111. Ce message M111 indique au serveur logique 210 que c'est le serveur AS2 qui a été sélectionné par le serveur AS1 lors de l'étape A110 pour réaliser le service S6 demandé. Pour se faire, le message M111, reçu par le serveur logique 210 au cours d'une étape B111, contient l'identifiant IDAS2 du serveur AS2 sélectionné (l'adresse du serveur AS2, par exemple). Selon une seconde alternative, le serveur AS1 fournit au serveur AS2 un identifiant du serveur logique 210. Cet identifiant correspond, par exemple, à l'adresse du serveur logique 210. Cet identifiant peut, par exemple, être transmis au serveur AS2 via le message M112 (étape A112). Le serveur AS2 identifie ainsi le serveur logique 210 et envoie à ce dernier un message M113 au cours d'une étape C113, ce message M113 comprenant un identifiant du serveur AS2 (son adresse par exemple). Ce message M113 est reçu par le serveur logique 210 au cours d'une étape B113.

Par ailleurs, dans un mode de réalisation particulier, lorsque le serveur d'applications AS1 reçoit une commande de sous-traitance M108 lors de l'étape A108, celui-ci est capable de réaliser au moins un service en relation avec la session SE1 en cours d'établissement avant de demander au cours de l'étape d'envoi A112 à un ou plusieurs serveurs d'applications SIP de sous-traiter la réalisation des services demandés.

On considère, par exemple, le cas où une commande de sous-traitance M108 est reçue par le serveur d'apptications AS1 lors de l'étape A108, cette commande comprenant les identifiants IDS1 et IDS5 des services S1 et S5, respectivement. Dans ce cas, le serveur d'applications AS1 détermine au cours de l'étape A110 qu'il est capable de mettre en oeuvre le service S1 et non le service S5. Dans ce cas, le serveur d'applications AS1 peut, par exemple, réaliser le service S1 avant de demander au serveur AS2, lors de l'étape d'envoi A112, de déclencher la réalisation du service S5.

D'autre part, selon un mode de réalisation particulier, une fois l'étape C112 effectuée, le serveur logique 210 peut envoyer au moins un message M116 aux serveurs d'applications chargés de sous-traiter la réalisation du ou des services demandés. Ces messages M116 permettent notamment de contrôler à distance la réalisation du ou des services demandés.

Dans le cas, par exemple, où le service S5 est identifié dans la commande M108 comme devant être sous-traité, le serveur logique 210 envoie au cours d'une étape B116 un message M116 au serveur d'applications AS2. Ce message M116 peut comprendre, par exemple, des informations nécessaires aux serveurs d'applications AS2 pour mettre en oeuvre un ou plusieurs services demandé. Une fois ce message M116 reçu au cours d'une étape C116, le serveur AS2 peut ainsi utiliser les informations envoyées par le service logique 210 pour mettre en oeuvre le service S5 demandé. Ces informations peuvent correspondre, par exemple, à des numéros de téléphone vers lesquels le serveur d'applications AS2 doit tenter d'établir une communication dans le cadre de la fonctionnalité « call Hunting ». L'envoi de tels messages M116 permet ainsi au serveur logique 210 de piloter (ou de contrôler) la réalisation d'un ou de plusieurs services dans le réseau IMS 209.

On notera que l'étape d'envoi B116 peut avoir lieu avant l'étape d'exécution C114 ou, alternativement, au cours de cette étape d'exécution. De plus, lorsque la commande de sous-traitance reçue par le serveur AS1 au cours de l'étape A108 est selon la commande M108A, l'étape B116 ne peut être réalisée qu'une fois que l'étape B111 ou B113 a eu lieu. En d'autres termes, le serveur logique 210 ne peut envoyer des commandes M116 qu'après avoir déterminé que le serveur AS2 a été sélectionné lors de l'étape A110 pour prendre en charge la sous-traitance du service S5 demandé.

De manière alternative, au moins un message M116 peut être envoyé depuis le serveur AS2 vers le serveur logique 210. L'étape C116 correspond alors à une étape d'envoi d'un message M116 et l'étape B116 correspond à une étape de réception du message M116 transmis par le serveur AS2. De manière plus générale, le serveur logique 210 et le serveur AS2 peuvent échanger des messages une fois que le message M112 a été reçu par le serveur AS2 (étape C112), le dialogue étant initié par le serveur logique 210 ou par le serveur AS2.

L`exemple décrit en référence à la figure 6 correspond au cas où le serveur logique 210 demande la sous-traitance de la réalisation d'un service en relation avec une session de communication en cours d'établissement entre les terminaux 202 et 204. Toutefois, selon un autre mode de réalisation de l'invention, le serveur logique 210 est capable de demander au serveur d'applications AS1 que la réalisation d'au moins un service soit sous-traitée dans le réseau IMS 210, ces services étant en relation avec une session de communication déjà établie dans le réseau IMS 210.

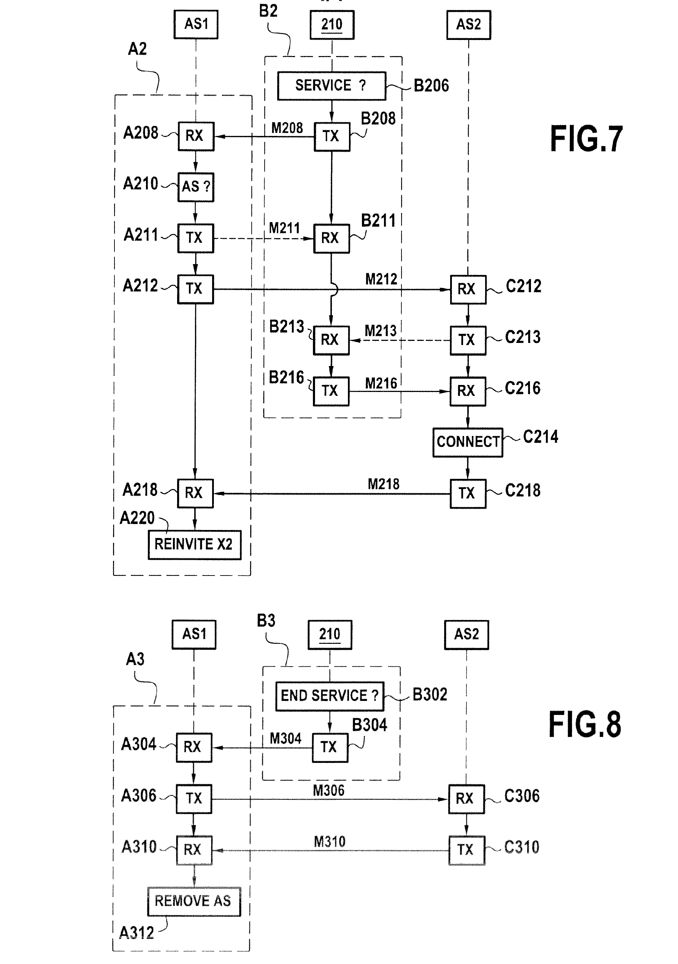

La **figure 7** représente les principales étapes du procédé A2 mis en oeuvre par le serveur d'applications AS1 et du procédé B2 mis en oeuvre par le serveur logique 210 dans un mode de réalisation particulier de l'invention.

On considère ici le cas où une session de communication notée SE2 est établie entre les terminaux 202 et 204. Le serveur logique 210 selon l'invention détermine au cours d'une étape B206 au moins un service à mettre en oeuvre dans le réseau IMS 210 en relation avec la session préétablie SE2. De même que pour l'étape B106 représentée en figure 6, l'étape de détermination B206 est réalisée à partir d'au moins un paramètre de session de la session en cours SE2. Ces paramètres de session peuvent correspondre, par exemple, à l'identité de l'appelé ou encore à la date et l'heure de l'établissement de l'appel.

Dans une première alternative, ces paramètres de session ont été au préalable transmis par le serveur d'applications AS1 au serveur logique 210 de manière identique aux étapes A102 à A104 représentées en figure 6. Selon une seconde alternative, la détermination au cours de l'étape B206 est réalisée à partir de paramètres de session reçus d'une entité autre que le serveur d'applications AS1. L'utilisateur appelant du terminal 202 peut, par exemple, envoyer une commande comprenant des informations de session adéquates, et ce via un canal de communication approprié. On peut ainsi envisager le cas où l'utilisateur appelant du terminal 202 envoie une commande de déclenchement de service au serveur logique 210 via une connexion internet en utilisant un autre terminal 211 (un ordinateur personnel, un PDA, etc.).

Une fois l'étape de détermination B206 réalisée, le serveur logique 210 envoie au cours d'une étape B208 une commande de sous-traitance M208 aux serveurs d'applications AS1, et ce de manière identique à l'étape B104 précédemment décrite.

On supposera ici que la commande de sous-traitance M208 demande à ce que le service S5 soit mis en oeuvre par un serveur d'applications SIP du réseau IMS 209 autre que le serveur AS1. Cette commande de sous-traitance M208 peut, par exemple, correspondre à une commande M208A ou M20B identique respectivement aux commandes M108A et M108B.

Une fois la commande de sous-traitance M208 reçue (étape A208), le serveur d'applications AS1 détermine, lors d'une étape d'identification A210 identique à l'étape A110, le ou les services à réaliser et la manière dont ils doivent être mis en oeuvre.

Dans l'exemple décrit ici, le serveur AS1 extrait de la commande de sous-traitance M208 reçue l'identifiant IDS5 correspondant au service S5 à réaliser et détermine que le serveur d'applications AS2 doit prendre en charge la réalisation du service S5 dans le réseau IMS 209

Une fois l'étape A210 réalisée, le serveur d'applications AS1 envoie deux messages de signalisation SIP M212 directement au serveur d'applications AS2 (étape A212). Ces messages SIP M212 sont typiquement des messages SIP de type INVITE correspondant aux deux demi-sessions d'appel associées aux terminaux 202 et 204, respectivement. Le serveur d'applications AS2 reçoit alors au cours d'une étape C212 les deux messages SIP M212.

Les deux messages M212 contiennent notamment un identifiant des utilisateurs appelant et appelé et des informations de contexte permettant au serveur d'applications AS2 de déterminer qu'il doit s'insérer dans la session de communication SE2 en cours.

Au cours d'une étape C214, un dialogue s'effectue entre les serveurs AS1 et AS2 afin d'inclure le serveur AS2 dans la chaîne de signalisation de l'appel. Le serveur d'applications AS2 joint ainsi les deux demi-appels correspondant aux deux messages M212 afin d'établir une session de communication unique. Cette étape C214 permet ainsi aux serveurs d'applications AS2 d'être insérée dans la chaîne de signalisation SIP de la session de communication SE2 entre les terminaux 202 et 204. Une fois cette opération effectuée, le serveur d'applications AS2 envoie au cours d'une étape C218 un message SIP 218 vers le serveur d'applications AS1. Ce message 218 correspond, par exemple, à un message de type SIP 100 OK indiquant que l'appel est établi.

Une fois le message SIP M218 reçu au cours d'une étape E218, le serveur d'applications AS1 peut procéder à l'envoi de deux messages SIP de type RE-INVITE vers respectivement les terminaux 202 et 204 (étape A220). Cette étape A220 est cependant optionnelle. Cette étape n'est réalisée que lorsque le serveur AS2 décide de changer les flux média des deux terminaux 202 et 204, par exemple, en les connectant sur un serveur média approprié.

Une fois inséré dans la signalisation de l'appel, le serveur d'applications AS2 peut fournir des services enrichis en relation avec la session en cours SE2. Ces services peuvent correspondre, par exemple, au passage d'un appel entre deux utilisateurs à un appel en mode conférence entre N utilisateurs (N étant un entier supérieur à 2), à l'enregistrement d'un appel, à la déformation de voix lors de l'appel, etc.

On notera que le serveur logique 210 peut commander aux serveurs d'applications AS1 d'insérer une pluralité de serveurs d'applications SIP dans la chaîne de signalisation de l'appel en cours.

De plus, de la même manière que dans les étapes B116 et C116 représentées en figure 6, le serveur d'applications AS1 peut également être configuré pour piloter la réalisation d'un service sous-traité par un serveur d'applications SIP du réseau IMS (étapes B216 et C216, respectivement). Plus précisément, une fois les étapes A212 et C212 réalisées, le serveur logique 210 peut envoyer au moins un message M216 au cours d'une étape B216, ce message étant reçu par le serveur AS2 au cours d'une étape C216.

On notera que, lorsque le serveur AS1 reçoit une commande de sous-traitance 208A au cours de l'étape A208 et sélectionne le serveur devant mettre en oeuvre le service désiré (étape A210), le serveur logique 210 doit en premier lieu identifier le serveur ainsi sélectionné avant de pouvoir piloter à distance la réalisation du service considéré (comme décrit en référence à la figure 6). En effet, le serveur logique 210 doit tout d'abord recevoir un message M211 (respectivement M213) au cours d'une étape B211 (respectivement B213) de la même manière que décrit précédemment en référence aux étapes A111 et B111 (respectivement C113 et B113).

De plus, comme décrit ci-avant en référence à la figure 6, un dialogue peut s'effectuer entre le serveur logique 210 et le serveur AS2, le dialogue étant initié après l'étape C112 par le serveur logique 210 ou par le serveur AS2.

D'autre part, lorsqu'une session de communication établie entre les terminaux 202 et 204 implique un flux de données média (vidéo, etc.), le mode de réalisation de la figure 7 permet de réorienter le flux média vers le serveur d'applications AS2 et, plus précisément, vers un serveur externe MRF associé audit serveur AS2.

Dans un mode de réalisation particulier du procédé B1 (respectivement B2), le serveur logique 210 n'envoie la commande de sous-traitance M108 (respectivement M208) lors de l'étape B108 (respectivement B208) que si celui-ci a déterminé au préalable que le serveur AS1 n'est pas apte à mettre en oeuvre au moins un des services à mettre en oeuvre dans le réseau IMS. Par exemple, dans le cas où le service S5 doit être déclenché dans le réseau IMS 209, le serveur logique 210 détermine lors de l'étape B10 (respectivement B206) que le serveur AS1 n'est pas apte à mettre lui-même en oeuvre le service S5. En conséquence, le serveur logique envoie une commande de sous-traitance au serveur logique AS1 afin que la réalisation du service S5 soit sous-traitée par un autre serveur d'applications SIP du réseau IMS 209.

On notera d'autre part que les commandes de sous-traitance M108B et M208B peuvent en outre indiquer au serveur d'applications AS1 l'ordre suivant lequel des services doivent être réalisés dans le réseau 209. On suppose, par exemple, que le serveur AS1 doit mettre en oeuvre les services S1 et S2 et que la commande M108B (ou M208B) spécifie au serveur AS1 que le service S5 doit être mis en oeuvre par le serveur AS2. Dans ce cas, la commande M108B (ou M208B) peut en outre définir à quel moment le service S5 doit être déclenché dans la chaîne des services à exécuter par le serveur AS1. En d'autres termes, la commande M108B (ou M208B) peut indiquer la position selon laquelle le service S5 doit être déclenché par rapport aux services S1 et S2 à exécuter par le serveur AS1.

La commande M108B (ou M208B) peut, par exemple, commander au serveur AS1 de déclencher la sous-traitance du service S5 entre les services S1 et S2, c'est-à-dire après exécution du service S1 et avant exécution du service S2. Pour ce faire, les services à déclencher S1, S2 et S5 peuvent, par exemple, être spécifiés dans le champ CH_IDS de le la commande M108B (ou M208B) selon un ordre conforme à leur ordre d'exécution.

D'autre part, selon un mode de réalisation particulier, la commande de sous-traitance M108 (ou M208) envoyée lors de l'étape B108 (respectivement B208) peut comprendre en outre au moins un paramètre supplémentaire utile à l'exécution du (ou des) service(s) demandé(s). Ces paramètres additionnels sont, par exemple, utilisés par le serveur AS1 pour mettre en oeuvre des services internes (S1 à S4) ou peuvent être fournis au serveur AS2 via la signalisation SIP. Dans ce dernier cas, le serveur AS1 peut insérer dans la commande M112 (ou M212) au moins un paramètre additionnel afin que le serveur AS2 l'utilise pour exécuter le service demandé. Un tel paramètre peut, par exemple, être inséré dans l'entête ou dans le corps de la commande M112 (ou M212).

La **figure 8** représente, sous forme d'un organigramme, les procédés A3 et B3 mis respectivement en oeuvre par le serveur d'applications AS1 et le serveur logique 210 pour interrompre la réalisation d'au moins un service sous-traité par un serveur d'applications SIP dans le réseau IMS 209. Plus précisément, on suppose ici que le serveur d'applications SIP AS2 est inclus dans la chaîne de signalisation d'un appel en cours entre les terminaux 202 et 204.

Au cours d'une étape B302, le serveur logique 210 détermine que le serveur d'applications AS2 doit se retirer de la chaîne de signalisation de l'appel. Le retrait du serveur AS2 peut résulter de plusieurs évènements. Le serveur logique 210 peut, par exemple, déterminer que le serveur AS2 doit être retiré lorsque :
- le serveur AS2 a achevé la mise en oeuvre d'un service demandé par le serveur logique 210,
- une commande d'arrêt a été envoyée depuis le serveur AS2 vers le serveur logique 210, ou
- une commande d'arrêt provenant d'une source externe au réseau IMS 209 a été reçue par le serveur logique 210 (par exemple, envoi d'un message par une application mise en oeuvre sur un ordinateur personnel 211 etc.).

D'autres critères peuvent également pris en compte tels que la date et de l'heure de l'établissement de l'appel (ou de la durée de l'appel), ou les identifiants de l'appelé et/ou de l'appelant.

Suite à l'étape B302, le service logique 210 envoie au cours d'une étape B304 une commande d'interruption M304 au serveur d'applications AS1. Une fois la commande d'interruption M304 reçue (étape A304), le serveur d'applications AS1 envoie un message SIP M306 directement au serveur d'applications AS2 afin de demander à ce dernier d'interrompre le service S5 (si ce dernier est toujours en cours de réalisation) et de se retirer de la chaîne de signalisation de l'appel en cours.

Le serveur d'applications AS2 reçoit alors au cours d'une étape C306, le message SIP M306 en provenance du serveur d'applications AS1 et envoie au cours d'une étape C310 un message SIP M310 au serveur d'applications AS1, ce message demandant au serveur AS1 de retirer le serveur AS2 de la chaîne de signalisation de l'appel en cours.

Une fois le message SIP M310 reçu (étape A310), le serveur d'applications AS1 réuni au cours d'une étape A312, les deux demi-sessions d'appel correspondant aux terminaux 202 et 204. A l'issue de l'étape A312, le serveur d'applications AS2 n'est plus présent dans la chaîne de signalisation de l'appel en cours.

Dans les modes de réalisation décrits en référence aux figures 6, 7 et 8, le serveur d'applications AS1 peut en outre insérer un identifiant unique de session (noté CallID) dans tous les messages envoyés au serveur logique 210 et au serveur d'applications SIP du réseau IMS 209 (AS1, AS2...) en relation avec une même session de communication. Dans ce cas particulier, cet identifiant unique est inséré dans chaque message échangé entre le serveur logique 210 et les différents serveurs d'applications SIP dans le réseau IMS afin de faciliter la gestion des services dans la chaîne de signalisation de la session de communication considérée.

En particulier, lorsque la requête d'établissement d'appel M104 envoyé par le serveur d'applications AS1 comprend un tel identifiant unique de session, la commande de sous-traitance M108 et les messages SIP M112, M118 et éventuellement M116 comprennent chacun de préférence ledit identifiant unique CallID, On notera toutefois que le serveur d'applications AS1 selon l'invention peut ne pas être le premier serveur d'applications SIP inséré dans la chaîne de signalisation de la session de communication considéré. Le serveur d'applications SIP AS3, par exemple, peut être inséré dans la chaîne de signalisation de la session en cours SE1 avant le serveur d'applications AS1. Dans ce cas, le serveur d'applications AS3 peut par exemple générer un identifiant unique de l'appel en cours d'établissement, de sorte que cet identifiant soit utilisé par le serveur logique 210 et les différentes entités SIP incluses dans la chaîne de signalisation de l'appel, et ce afin de gérer de manière optimisée les services dans le réseau IMS 209.

En outre de l'identifiant unique CallID, la requête M104 peut comprendre l'identifiant du serveur AS1 dont provient la requête M104. Une telle requête peut, par exemple, se présenter de la manière suivante :
sip :Adresse_SIP_AS2 ;call_id=some_id ;service_callback=http:/Adresse_AS_logique.

Plus généralement, l'identifiant unique CallID peut être contenu, par exemple, dans un entête (header) SIP standard, tel que l'entête unique « P-Charging-Vector » utilisé dans le cadre de la facturation des appels. Alternativement, le CallID peut être contenu dans un entête SIP propriétaire. On comprendra cependant que l'identifiant CallID peut prendre d'autres formes.

A noter que les différentes étapes de traitement réalisées par le serveur d'applications AS1 de l'invention sont réalisées notamment par le processeur 300, celui-ci faisant appel aux mémoires 302, 304 et/ou 306 selon les opérations à effectuer. De plus, le serveur AS1 de l'invention communique avec le serveur logique 210 au moyen de son interface de service 310. Le serveur AS1 communique en outre avec les autres serveurs d'applications SIP du réseau IMS 209 (AS2, AS3...) au moyen de son interface de signalisation réseau 308.

Par ailleurs, les différentes étapes de traitement réalisées par le serveur logique 210 de l'invention sont réalisées notamment par le processeur 400, celui-ci faisant appel aux mémoires 402, 404 et/ou 406 selon les opérations à effectuer. De plus, le serveur logique de l'invention communique avec les serveurs d'applications AS1, AS2 et AS3 au moyen de son interface de service 408. Dans ce cas, il est nécessaire que les autres serveurs AS2 et AS3 comporte également une interface de service afin de pouvoir communiquer avec le serveur logique.

De manière alternative, le serveur logique 210 peut en outre comporter une interface de signalisation réseau (non représentée sur la figure 4) afin notamment de pouvoir piloter à distance la réalisation de services sous-traitées par des serveurs d'applications du réseau IMS 209 ne disposant pas d'interface de service.

La présente invention permet avantageusement de gérer le déclenchement et l'interruption de services dans un réseau IMS et ce à distance grâce à l'utilisation d'un serveur logique externe. Cette gestion à distance offre un gain significatif en termes de flexibilité et de personnalisation lors du développement de nouveaux services à mettre en oeuvre dans un réseau IMS, ce en combinant les avantages propres aux services du monde web, par exemple, et ceux propres au réseau de télécommunications.

De plus, l'invention permet de limiter l'impact imposé par la gestion de tels services au réseau IMS en termes de ressources notamment. En effet, comme mentionné précédemment, l'utilisation d'un serveur logique pour gérer des services dans un réseau IMS est beaucoup moins pénalisante en termes de ressources sollicitées que celle d'un serveur d'applications SIP dédié à la gestion de la logique de service.

L'invention permet à un premier serveur d'applications de déclencher un deuxième serveur d'applications afin de mettre en oeuvre au moins un service désiré. Ce déclenchement peut notamment faire intervenir un « SCIM » ou « Service Broker » mis en oeuvre dans le premier serveur d'applications. De cette manière, il est possible d'éviter au serveur S-CSCF du coeur de réseau 206, par exemple, de prendre en charge le déclenchement de multiples serveurs d'applications. Grâce à l'invention, le coeur de réseau ne doit déclencher qu'un seul serveur d'applications (AS1 dans les exemples ci-dessus).

L'invention permet en particulier de bénéficier de la souplesse d'utilisation des services web dont la mise en oeuvre est souvent moins délicate dans un réseau de télécommunications.

L'invention permet par ailleurs d'insérer un ou plusieurs serveurs d'applications SIP dans la chaîne de signalisation SIP d'une session de communication et ce, uniquement lorsque cela est nécessaire. De plus, il est possible de retirer des serveurs d'applications SIP d'une chaîne de signalisation d'un appel lorsque ces serveurs n'ont plus de rôle à jouer en relation avec l'appel. Cette gestion flexible des serveurs d'applications SIP permet ainsi de limiter au maximum les ressources nécessaires pour gérer une communication dans un réseau de télécommunications de type IMS.

L'invention permet, par exemple, d'insérer un ou plusieurs serveurs d'applications SIP à la volée en cours de conversations entre deux terminaux afin de mettre en oeuvre des services de téléphonie enrichis tels que, par exemple, le déclenchement d'une fonction de déformation de voix demandée par au moins un des utilisateurs impliqués dans la communication considérée. Il est ainsi possible de ne faire intervenir des services que lorsque ceux-ci sont souhaités par les utilisateurs abonnés.

L'invention permet également avantageusement de limiter au maximum les problèmes de conflits potentiels entre les différents serveurs d'applications impliqués dans une même session de communication.

De plus, le serveur logique selon l'invention peut être une entité relativement éloignée du réseau IMS considéré (exemple : AS web). L'utilisation de tels serveurs logiques permet de piloter à distance des services élémentaires ou plus sophistiqués dans un réseau IMS via des interfaces API des serveurs d'applications SIP sollicités.

L'utilisation de ces APIs facilite en outre le développement et l'utilisation de nouveaux services en combinaison avec les services élémentaires généralement déployés.

L'utilisation d'un identifiant unique de session (Call ID) permet également d'utiliser de manière commune les APIs des différents serveurs d'applications SIP sollicités.

L'invention permet aussi de développer plus facilement des services IMS associés aux utilisateurs, tels que des services de téléphonie fixe ou mobile (voix, vidéo, échange de données). Des développeurs web peuvent ainsi plus facilement développer des services associés à une ligne téléphonique donnée. L'invention permet notamment d'invoquer de manière dynamique des services dans un réseau IMS tels que :
- un accueil téléphonique personnalisé en fonction de l'appelant de la session de communication considérée ;
- la gestion de la joignabilité de l'appelant par une application externe et ce en fonction d'un calendrier électronique (Outlook^{TM}, Windows live^{TM}, etc.).

## Revendications

1. Procédé mis en oeuvre par un serveur logique (210) hors d'un réseau de télécommunications (209) pour commander un premier serveur d'applications (AS1) localisé dans ledit réseau, le procédé comprenant :
la détermination (B106), en fonction d'au moins un paramètre d'une session dans ledit réseau, d'au moins un service (S1-S7) à mettre en oeuvre dans le réseau en relation avec ladite session, le procédé étant **caractérisé en ce qu'**il comprend en outre :
l'envoi (B108) d'une commande (M108) dite de sous-traitance au premier serveur comprenant un identifiant (IDS5) dudit au moins un service (S5) et au moins un champ (CH_ST, CH_IDAS) pour demander audit premier serveur que ledit au moins un service soit mis en oeuvre par un autre serveur d'applications (AS2, AS3) dudit réseau.

2. Procédé selon la revendication 1, dans lequel ledit envoi est réalisé lorsque ledit serveur logique a déterminé au préalable (B106) que ledit premier serveur n'est pas apte à réaliser ledit au moins un service.

3. Procédé selon la revendication 1 ou 2 comprenant en outre :
l'identification (B106), avant ledit envoi, dudit autre serveur (AS2), ledit au moins un champ (CH_IDAS) contenant un identifiant dudit autre serveur.

4. Procédé selon l'une quelconque des revendications 1 à 3 comprenant en outre l'envoi (B116) d'au moins une commande d'exécution (M116) audit autre serveur de manière à piloter à distance la réalisation dudit au moins un service (S5).

5. Procédé selon l'une quelconque des revendications 1 à 4, comportant une étape préliminaire de réception (B104) dudit au moins un paramètre en provenance dudit premier serveur.

6. Procédé selon l'une quelconque des revendications 1 à 5, comprenant en outre l'envoi (B304) d'une commande d'interruption (M304) au premier serveur commandant le retrait dudit autre serveur de ladite session.

7. Procédé mis en oeuvre par un premier serveur d'applications (AS1) compris dans un réseau de télécommunications (209), le procédé comprenant :
la réception (A108) d'une commande (M108) dite de sous-traitance provenant d'un serveur logique (210) externe audit réseau, dans lequel ladite commande de sous-traitance comprend un identifiant (IDS5) d'au moins un service (S5) et au moins un champ (CH_ST, CH_IDAS) pour demander audit premier serveur que ledit au moins un service soit mis en oeuvre par un autre serveur d'applications (AS2, AS3) dudit réseau,
l'identification (A110), à partir de la commande de sous-traitance reçue, dudit autre serveur (AS2), et
l'envoi (A112) d'au moins un message (M112) audit autre serveur commandant le déclenchement dudit au moins un service.

8. Procédé selon la revendication 7, dans lequel le second serveur est identifié selon l'une des manières suivantes :
- à partir d'un identifiant (IDAS2) dudit second serveur extrait de la commande de sous-traitance reçue, ou
- à partir d'un identifiant (IDAS2) dudit second serveur mémorisé en association avec ledit au moins un service dans le premier serveur.

9. Procédé selon la revendication 7 ou 8, dans lequel la commande de sous-traitance est reçue en réponse à l'envoi (A104) préalable d'au moins un paramètre d'une session établie ou en cours d'établissement dans ledit réseau, ledit au moins un service (S1-S6) devant être mis en oeuvre dans le réseau en relation avec ladite session.

10. Procédé selon la revendication 9 comprenant en outre, en réponse à une commande d'interruption (M304) reçue en provenance du serveur logique, l'envoi (A306) d'un second message (M306) audit autre serveur commandant le retrait dudit autre serveur de la session.

11. Programme d'ordinateur (PG1, PG2) comportant des instructions pour l'exécution des étapes du procédé selon l'une quelconque des revendications 1 à 10 lorsque ledit programme est exécuté par un ordinateur (210, AS1).

12. Support d'enregistrement (304, 404) lisible par un ordinateur sur lequel est enregistré un programme d'ordinateur (PG1, PG2) comprenant des instructions pour l'exécution des étapes du procédé selon l'une quelconque des revendications 1 à 10.

13. Serveur logique (210) externe à un réseau de télécommunications (206) et apte à un premier serveur d'applications (AS1) localisé dans ledit réseau, le serveur logique comprenant :
des moyens de détermination (400), en fonction d'au moins un paramètre d'une session dans ledit réseau, d'au moins un service (S1-S7) à mettre en oeuvre dans le réseau en relation avec ladite session, le serveur logique étant **caractérisé en ce qu'**il comprend en outre :
des moyens d'envoi (400, 406) d'une commande dite de sous-traitance au premier serveur comprenant un identifiant (IDS5) dudit au moins un service (S5) et au moins un champ (CH_ST, CH_IDAS) pour demander audit premier serveur que ledit au moins un service soit mis en oeuvre par un autre serveur d'applications (AS2, AS3) dudit réseau.

14. Serveur logique selon la revendication 13 comprenant en outre au moins une des interfaces (406) suivantes : une interface http, une interface « web service », une interface RMI et une interface CORBA, vers au moins un serveur IMS (AS1, AS2).

15. Serveur d'applications (AS1) compris dans un réseau de télécommunications (206), le serveur comprenant :
des moyens de réception (300, 306) d'une commande (M108) dite de sous-traitance provenant d'un serveur logique (210) externe audit réseau, dans lequel ladite commande de sous-traitance comprend un identifiant (IDS5) d'au moins un service (S5) et au moins un champ (CH_ST, CH_IDAS) pour demander audit premier serveur que ledit au moins un service soit mis en oeuvre par un autre serveur d'applications (AS2, AS3) du réseau,
des moyens d'identification (300), à partir de la commande de sous-traitance reçue, dudit autre serveur (AS2), et
des moyens d'envoi (300, 308) d'au moins un message (M112) audit autre serveur commandant le déclenchement dudit au moins un service.
